(19) Europäisches Patentamt
European Patent Office
Office européen des brevets

(11) Veröffentlichungsnummer: **0 213 566 A2**

# (12) EUROPÄISCHE PATENTANMELDUNG

(21) Anmeldenummer: **86111612.7**

(51) Int. Cl.4: **C07C 145/02**, A01N 41/02

(22) Anmeldetag: **22.08.86**

(30) Priorität: **03.09.85 DE 3531362**

(43) Veröffentlichungstag der Anmeldung:
**11.03.87 Patentblatt 87/11**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Kühle, Engelbert, Dr.**
**von Bodelschwingh-Strasse 42**
**D-5060 Berg.-Gladbach 2(DE)**
Erfinder: **Schmitt, Hans-Georg, Dr.**
**Am Oberend 13**
**D-4150 Krefeld(DE)**
Erfinder: **Brandes, Wilhelm, Dr.**
**Eichendorffstrasse 3**
**D-5652 Leichlingen(DE)**
Erfinder: **Reinecke, Paul, Dr.**
**Steinstrasse 8**
**D-5090 Leverkusen 3(DE)**

## (54) N-Sulfenylierte Benzosulfonsäureamide.

(57) N-Sulfenylierte Benzolsulfonsäureamide der Formel (I)

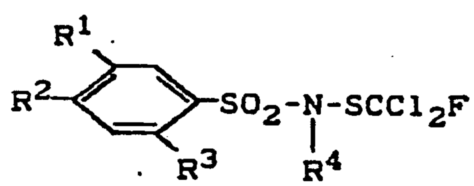

(I)

in welcher

$R^1$, $R^2$ und $R^3$ unabhängig voneinander für Wasserstoff, Halogen, Nitro, Alkyl und Halogenalkyl stehen und

$R^4$ für Alkyl, Alkenyl, Halogenalkinyl, gegebenenfalls durch Alkyl substituiertes Cycloalkyl, Alkoxyalkyl oder Alkylthioalkyl steht, sowie ihre fungizide Verwendung im Pflanzenschutz.

Die neuen N-sulfenylierten Benzolsulfonsäureamide können hergestellt werden, indem man geeignete Benzolsulfonsäureamide mit Dichlorfluormethansulfenylchlorid umsetzt.

EP 0 213 566 A2

## N-Sulfenylierte Benzolsulfonsäureamide

Die vorliegende Erfindung betrifft neue N-sulfenylierte Benzolsulfonsäureamide, ein Verfahren zu ihrer Herstellung sowie ihre Verwendung als Fungizide im Pflanzenschutz.

Seit langem ist bekannt, daß N-Trihalogenmethylthio-Verbindungen als Fungizide in Landwirtschaft und Gartenbau verwendet werden können. So werden beispielsweise N-(Trichlormethylthio)-tetrahydrophthalimid (DE-PS 887 506) und N,N-Dimethyl-N'-phenyl-N'-(dichlorfluormethylthio)-sulfamid (DE-PS 1.193.498) in Obst-und Weinbau zur Bekämpfung von Pilzkrankheiten praktisch eingesetzt. Weiterhin sind auch N-(Dichlorfluormethylthio)-benzolsulfonamide, wie z.B. N-Dichlorfluormethylthio-N-methyl-3,4-dichlorbenzol-bzw, -3-nitrobenzolsulfonamid, bekannt (vgl. ebenfalls DE-PS 1.193.498).

Es wurden neue N-sulfenylierte Benzolsulfonsäureamide der allgemeinen Formel (I)

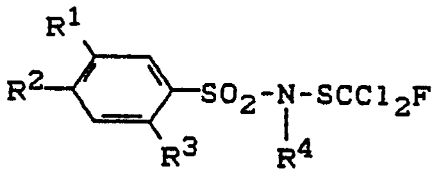

(I)

gefunden, in welcher

$R^1$, $R^2$ und $R^3$ unabhängig voneinander für Wasserstoff, Halogen, Nitro, Alkyl und Halogenalkyl stehen und

$R^4$ für Alkyl, Alkenyl, Halogenalkinyl, gegebenenfalls durch Alkyl substituiertes Cycloalkyl, Alkoxyalkyl oder Alkylthioalkyl steht, ausgenommen die Verbindungen, in denen

$R^4$ für Methyl, $R^1$, $R^2$ und $R^3$ für Wasserstoff oder$R^1$ für Chlor oder Nitro, $R^2$ für Chlor und $R^3$ für Wasserstoff stehen, oder $R^1$ für Nitro und $R^2$ und $R^3$ für Wasserstoff stehen, oder $R^1$ und $R^3$ für Chlor und $R^2$ für Wasserstoff stehen und $R^4$ für n-Butyl, $R^1$ und $R^3$ für Wasserstoff und $R^2$ für Chlor stehen.

Weiterhin wurde gefunden, daß man die N-sulfenylierten Benzolsulfonamide der allgemeinen Formel (I)

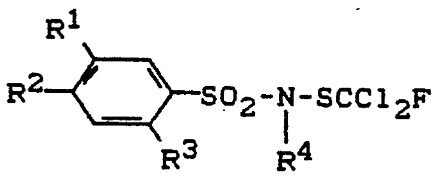

(I)

in welcher

$R^1$, $R^2$ und $R^3$ unabhängig voneinander für Wasserstoff, Halogen, Nitro, Alkyl und Halogenalkyl stehen und

$R^4$ für Alkyl, Alkenyl, Halogenalkinyl, gegebenenfalls durch Alkyl substituiertes Cycloalkyl, Alkoxyalkyl oder Alkylthioalkyl steht, ausgenommen die Verbindungen, in denen

$R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$ für Wasserstoff stehen, oder $R^1$ und $R^3$ für Chlor und $R^2$ für Wasserstoff stehen und $R^4$ für n-Butyl, $R^1$ und $R^3$ für Wasserstoff und $R^2$ für Chlor stehen, erhält

wenn man Benzolsulfonamide der allgemeinen Formel (II)

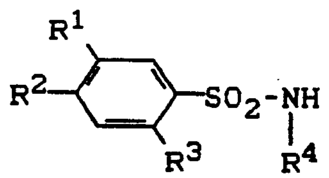

(II)

in welcher die Reste $R^1$ bis $R^4$ die oben angegebene Bedeutung haben, mit Dichlorfluormethansulfenylchlorid der Formel (III)

$Cl\text{-}SCCl_2F$ (III)

in Gegenwart eines säurebindenden Mittels und gegebenenfalls in Gegenwart eines Verdünnungsmittels umsetzt.

Halogen bedeutet in den Definitionen von $R^1$, $R^2$ und $R^3$ erfindungsgemäß Fluor, Chlor, Brom und Iod, vorzugsweise Fluor, Chlor und Brom, insbesondere Brom und Chlor.

Alkyl bedeutet in den Definitionen von $R^1$, $R^2$ und $R^3$ geradkettiges oder verzweigtes Alkyl mit 1 bis 4 Kohlenstoffatomen, bevorzugt mit 1 bis 3, insbesondere mit 1 oder 2 Kohlenstoffatomen. Es seien genannt Methyl, Ethyl, n-Propyl, iso-Propyl, n-Butyl, sec.-Butyl und tert.-Butyl.

Halogenalkyl bedeutet in den Definitionen $R^1$, $R^2$ und $R^3$ durch 1 bis 5 Halogenatome substituiertes geradekettiges oder verzweigtes Alkyl mit 1 bis 4 Kohlenstoffatomen, bevorzugt mit 1 bis 3, insbesondere mit 1 oder 2 Kohlenstoffatomen, Halogen bedeutet Fluor, Chlor, Brom und Iod, bevorzugt Fluor, Chlor und Brom, insbesondere Fluor und/oder Chlor. Es seien genannt Trifluormethyl, Trichlormethyl, Dichlorfluormethyl und Dichlorfluorethyl.

Alkyl bedeutet in der Definition $R^4$ geradkettiges oder verzweigtes Alkyl mit 1 bis 8 Kohlenstoffatomen, bevorzugt mit 1 bis 6, insbesondere mit 1 bis 5 Kohlenstoffatomen. Genannt seien Methyl, Ethyl, n-Propyl, iso-Propyl, n-Butyl, iso-Butyl, tert.-Butyl, n-Pentyl, n-Hexyl, n-Heptyl und n-Octyl.

Alkenyl bedeutet in der Definition von $R^4$ Alkenyl mit 3 bis 6 Kohlenstoffatomen, bevorzugt mit 3 bis 5 Kohlenstoffatomen. Genannt seien Allyl, Crotyl, Pentenyl und Hexenyl.

Halogenalkinyl bedeutet in der Definition von $R^4$ durch 1 bis 3 Halogenatome substituiertes Alkinyl mit 3 bis 6 Kohlenstoffatomen, bevorzugt mit 3 bis 5, insbesondere mit 3 oder 4 Kohlenstoffatomen. Halogen bedeutet Fluor, Chlor, Brom oder Iod, bevorzugt Chlor und Iod, insbesondere Iod. Genannt seien Iodpropargyl und Iodbutinyl.

Gegebenenfalls ein-bis vierfach durch Alkyl substituiertes Cycloalkyl in der Definition von $R^4$ bedeutet monocyclisches Cycloalkyl mit 3 bis 8 Ringkohlenstoffatomen, bevorzugt mit 3 bis 7, insbesondere mit 5 oder 6 Ringkohlenstoffatomen. Der Substituent Alkyl in dem Zusammenhang bedeutet geradkettiges oder verzweigtes Alkyl mit 1 bis 4 Kohlenstoffatomen, bevorzugt mit 1 bis 3, insbesondere mit 1 oder 2 Kohlenstoffatomen. Genannt seien Methyl, Ethyl, n-Propyl, iso-Propyl, n-Butyl, iso-Butyl und tert.-Butyl.

Genannt seien Cyclopropyl, Cyclobutyl, Cyclopentyl, Cyclohexyl, Cycloheptyl, 3,3,5-Trimethylcyclohexyl, 4-Methylcyclohexyl und 2-Methylcyclopentyl.

Alkoxyalkyl und Alkylthioalkyl bedeuten in der Definition von $R^4$ Alkoxy-oder Alkylthioalkyl mit 1 bis 6 Kohlenstoffatomen je Alkoxy-und Alkylthio-und 2 -6 Kohlenstoffatomen im Alkylteil, bevorzugt mit 1 bis 4, insbesondere mit 1 bis 3 Kohlenstoffatomen je Alkoxy-und Alkylthio-und 2-4, insbesondere 2 oder 3 Kohlenstoffatomen im Alkylteil. Genannt seien Methoxyethyl, Methoxy-n-propyl, Methoxy-n-butyl, Ethoxyethyl, Ethoxy-n-propyl, Ethoxy-n-butyl, n-Propoxyethyl, n-Propoxy-n-propyl, n-Propoxy-n-butyl und n-Butoxy-n-butyl, Methylthioethyl, Methylthio-n-propyl, Methylthio-n-butyl, Ethylthioethyl, Ethylthio-n-propyl, Ethylthio-n-butyl, n-Propylthio-n-butyl und n-Butylthio-n-butyl.

Die erfindungsgemäßen N-sulfenylierten Benzolsulfonsäureamide der Formel (I) weisen eine gute fungizide Wirksamkeit im Pflanzenschutz bei guter Pflanzenverträglichkeit auf.

Überraschenderweise zeigen dabei die erfindungsgemäßen Verbindungen eine erheblich höhere fungizide Wirksamkeit als die aus dem Stand der Technik bekannten Verbindungen, die strukturell und wirkungsmäßig sehr naheliegende Verbindungen sind.

Die erfindungsgemäßen N-sulfenylierten Benzolsulfonsäureamide sind durch die Formel (I) allgemein definiert. Bevorzugt sind Verbindungen, in denen

$R^1$, $R^2$ und $R^3$ unabhängig voneinander für Wasserstoff, Fluor, Chlor, Brom, Alkyl mit 1 bis 3 Kohlenstoffatomen, Halogenalkyl mit 1 bis 3 Kohlenstoffatomen und 1 bis 5 Halogenatomen, bevorzugt Fluor und Chlor, stehen und

$R^4$ für Alkyl mit 1 bis 6 Kohlenstoffatomen, Alkenyl mit 3 bis 5 Kohlenstoffatomen, Halogenalkinyl mit 1 bis 3 Chlor-oder Iodatomen und 3 bis 5 Kohlenstoffatomen, gegebenenfalls ein-bis vierfach durch Alkyl mit 1 bis 3 Kohlenstoffatomen substituiertes monocyclisches Cycloalkyl mit 3 bis 7 Ringkohlenstoffatomen, Alkoxyalkyl oder Alkylthioalkyl mit 1 bis 4 Kohlenstoffatomen je Alkoxy-und Alkylthio-und 2 -4 Kohlenstoffatomen im Alkylteil steht, ausgenommen die Verbindungen, in denen

$R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$für Wasserstoff stehen, oder $R^1$ und $R^3$ für Chlor und $R^2$ für Wasserstoff stehen und $R^4$ für n-Butyl, $R^1$ und $R^3$ für Wasserstoff und $R^2$ für Chlor stehen.

Besonders bevorzugt sind Verbindungen der Formel (I), in welcher

$R^1$, $R^2$ und $R^3$ unabhängig voneinander für Wasserstoff, Brom, Chlor, Alkyl mit 1 oder 2 Kohlenstoffatomen, Halogenalkyl mit 1 oder 2 Kohlenstoffatomen und 1 bis 5 Fluoratomen stehen und

$R^4$ für Alkyl mit 1 bis 5 Kohlenstoffatomen, für Alkenyl mit 3 bis 5 Kohlenstoffatomen, Halogenalkinyl mit 3 oder 4 Kohlenstoffatomen und 1 bis 3 Iodatomen, gegebenenfalls ein-bis vierfach durch Methyl oder Ethyl substituiertes monocyclisches Cycloalkyl mit 5 oder 6 Ringkohlenstoffatomen, Alkoxyalkyl oder Alkylthioalkyl mit 1 bis 3 Kohlenstoffatomen je Alkoxy-und Alkylthio-und 2 oder 3 Kohlenstoffatomen im Alkylteil, ausgenommen die Verbindungen, in denen

$R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$ für Wasserstoff stehen, oder $R^1$ und $R^3$ für Chlor und $R^2$ für Wasserstoff stehen und $R^4$ für n-Butyl, $R^1$und $R^3$ für Wasserstoff und $R^2$ für Chlor stehen.

Weiterhin sind die Verbindungen der Formel - (I) besonders bevorzugt, in welchen

$R^1$, $R^2$ und $R^3$ unabhängig voneinander für Wasserstoff, Chlor, Nitro oder Methyl stehen,

$R^4$ für Methyl, Ethyl, iso-Propyl, n-Butyl, Iodpropargyl, Cyclopentyl, Cyclohexyl, Allyl oder 3-Methoxy-n-propyl steht, ausgenommen die Verbindungen, in denen $R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$ für Wasserstoff stehen, oder $R^1$ und $R^3$ für Chlor und $R^2$ für Wasserstoff stehen und $R^4$ für n-Butyl, $R^1$ und $R^3$ für Wasserstoff und $R^2$ für Chlor stehen.

Im einzelnen seien neben den Herstellungsbeispielen folgende N-sulfenylierte Benzolsulfonsäureamide der Formel (I) genannt:

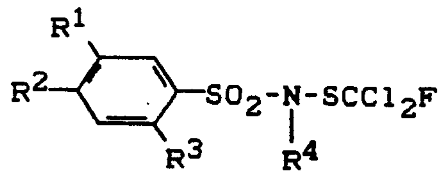

(I)

| $R^1$ | $R^2$ | $R^3$ | $R^4$ |
|---|---|---|---|
| H | H | H | $C_2H_5$ |
| H | H | H | $C_3H_7$-i |
| H | H | H | $C_4H_9$-i |
| H | H | H | $C_4H_9$-t |
| H | H | H | $CH_2C(CH_3)_3$ |
| H | Cl | H | $C_3H_7$-n |
| H | Cl | H | $C_3H_7$-n |
| H | Cl | H | $CH_2CH=CH_2$ |
| Cl | H | H | $CH_3$ |
| Cl | H | H | 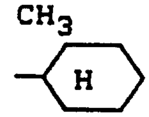 |
| H | $CH_3$ | H | $CH_3$ |
| H | $CH_3$ | H | $C_4H_9$-n |
| H | $CH_3$ | H | 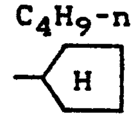 |
| H | $CH_3$ | H | 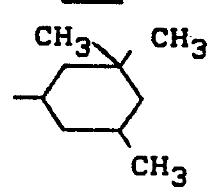 |
| H | $CF_3$ | H | $CH_3$ |
| H | $CF_3$ | H | $C_2H_5$ |
| $NO_2$ | H | H | $CH_3$ |
| H | $NO_2$ | H | $CH_3$ |
| H | $NO_2$ | H | 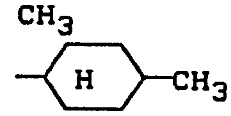 |

Verwendet man beispielsweise 4-Methylbenzolsulfonsäuremethylamid und Dichlorfluormethansulfenylchlorid als Ausgangskomponenten, so kann der Reaktionsverlauf durch das nachfolgende Formelschema wiedergegeben werden:

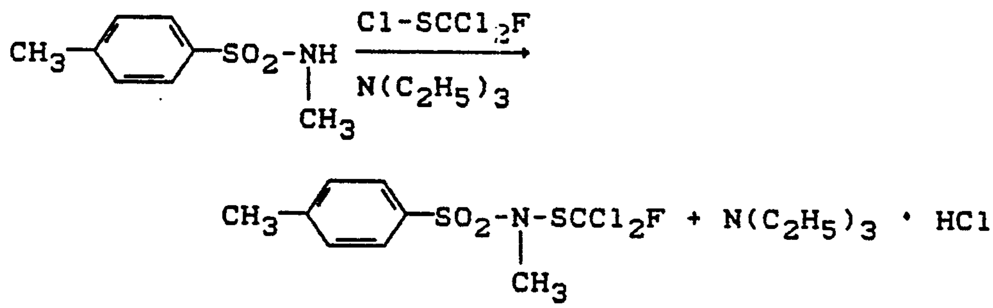


Die als Ausgangsstoffe benötigten benzolsulfonsäureamide sind durch die Formel (II) allgemein definiert. In dieser Formel haben $R^1$ bis $R^4$ vorzugsweise die Bedeutungen, die bei der Beschreibung der erfindungsgemäßen Verbindungen der Formel I für diese Substituenten genannt worden sind.

Die Benzolsulfonsäureamide der Formel (II) sind bekannt oder in an sich bekannter Weise erhältlich, wenn man Benzolsulfochloride der Formel (IV)

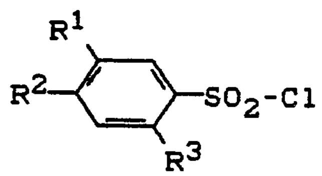

(IV)

in welcher $R^1$ bis $R^3$ die bei Formel (I) angegebene Bedeutung haben, mit einem primären Amin der Formel (V)

$R^4$-$NH_2$ (V)

in welcher $R^4$ die oben angegebene Bedeutung hat, gegebenenfalls in Gegenwart einer Base und eines Verdünnungsmittels umsetzt.

Die als Ausgangsmaterialien benötigten Benzolsulfochloride sind durch Formel (IV) allgemein definiert. In dieser Formel stehen $R^1$ bis $R^3$ vorzugsweise für die Bedeutungen, die bereits im Zusammenhang mit Formel (I) genannt worden sind.

Geeignete Benzolsulfochloride sind z.B. Benzol-, 4-Toluol-, 2-, 3-oder 4-Chlorbenzol-, 3,4-Dichlorbenzol-, 3-oder 4-Nitrobenzol-, 3-Trifluormethyl-4-chlorbenzolsulfochlorid.

Die als Ausgangsstoffe benötigten Amine sind durch die Formel (V) allgemein definiert. In dieser Formel steht $R^4$ vorzugsweise für die Bedeutungen, die bereits im Zusammenhang mit Formel (I) genannt worden sind.

Geeignete Amine der Formel (V) sind beispielsweise Methyl-, Ethyl-, Isopropyl-, tert. Butyl-, Allyl-, Methoxyethyl-, Methylmercaptoethyl-, Propargyl-, Cyclopentyl-, Cyclohexyl-, 4-Methylcyclohexylamin.

Die Benzolsulfonpropargylamide können durch Iodierung in alkalischem Medium in die 3-Iodpropargylamide übergeführt werden.

Das Dichlorfluormethansulfenylchlorid der Formel (III) ist literaturbekannt (vgl. z.B. Ang. Chem. 76, 807 (1964)).

Bei der Durchführung des erfindungsgemäßen Verfahrens kommen als Verdünnungsmittel alle inerten organischen Lösungsmittel infrage. Hierzu gehören vorzugsweise Kohlenwasserstoffe, wie Toluol; Chlorkohlenwasserstoffe, wie Methylenchlorid und Chlorbenzol oder Ether, wie Dioxan und Wasser.

Als säurebindende Mittel können anorganische Basen wie Natriumhydroxid und Natriumcarbonat oder tert.-Amine, wie Pyridin und Triethylamin verwendet werden.

Die Reaktionstemperaturen können in einem größeren Bereich variiert werden. Im allgemeinen arbeitet man von 0 bis 100°C, vorzugsweise 20 bis 50°C.

Das erfindungsgemäße Verfahren wird wie folgt ausgeführt: ein Benzolsulfonsäureamid der Formel (II) und das Sulfenylchlorid der Formel (III) werden in einem Verdünnungsmittel vorgelegt. Dazu wird bei Raumtemperatur der Säurebinder portionsweise zugegeben, so daß die Reaktionstemperatur auf etwa 40°C ansteigt. Nach Beendigung der Umsetzung wird das N-sulfenylierte Benzolsulfonsäureamid der Formel (I) mit Wasser ausgefällt und auf übliche Art isoliert und gereinigt - (Destillation oder Kristallisation).

Die erfindungsgemäßen Wirkstoffe weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Beispielhaft aber nicht begrenzend seien einige Erreger von pilzlichen Erkrangungen, die unter die oben aufgezählten Oberbegriffe fallen, gennant:

Pythium-Arten, wie beispielsweise Pythium ultimum;

Phytophthora-Arten, wie beispielsweise Phytophthora infestans;

Pseudoperonospora-Arten, wie beispielsweise Pseudoperonospora humuli oder Pseudoperonospora cubense;

Plasmopara-Arten, wie beispielsweise Plasmopara viticola;

Peronospora-Arten, wie beispielsweise Peronospora pisi oder P. brassicae;

Erysiphe-Arten, wie beispielsweise Erysiphe graminis;

Sphaerotheca-Arten, wie beispielsweise Sphaerotheca fuliginea;

Podosphaera-Arten, wie beispielsweise Podosphaera leucotricha;

Venturia-Arten, wie beispielsweise Venturia inaequalis;

Pyrenophora-Arten, wie beispielsweise Pyrenophora teres oder P. graminea

(Konidienform: Drechslera, Syn: Helminthosporium);

Cochliobolus-Arten, wie beispielsweise Cochliobolus sativus (Konidienform: Drechslera, Syn: Helminthosporium);

Uromyces-Arten, wie beispielsweise Uromyces appendiculatus;

Puccinia-Arten, wie beispielsweise Puccinia recondita;

Tilletia-Arten, wie beispielsweise Tilletia caries;

Ustilago-Arten, wie beispielsweise Ustilago nuda oder Ustilago avenae;

Pellicularia-Arten, wie beispielsweise Pellicularia sasakii;

Pyricularia-Arten, wie beispielsweise Pyricularia oryzae;

Fusarium-Arten, wie beispielsweise Fusarium culmorum;

Botrytis-Arten, wie beispielsweise Botrytis cinerea;

Septoria-Arten, wie beispielsweise Septoria nodorum;

Leptosphaeria-Arten, wie beispielsweise Leptosphaeria nodorum;

Cercospora-Arten, wie beispielsweise Cercospora canescens;

Alternaria-Arten, wie beispielsweise Alternaria brassicae;

Pseudocercosporella-Arten, wie beispielseise Pseudocercosporella herpotrichoides.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder - schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier-und/oder - schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalo cyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen in Mischung mit anderen bekannten Wirkstoffen vorliegen, wie Fungizide, Insektizide, Akarizide und Herbizide, sowie in Mischungen mit Düngemitteln und Wachstumsregulatoren.

Die Wirkstoffe können als solche, in Form ihrer Formulierungen oder den daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Erwähnt sei auch die gut fungizide Wirkung gegen Rost, Septoria und Cochliobolus sativus im Getreide, die gute fungizide Wirkung im Agarplattetest sowie die bakterizide Wirkung.

Herstellungsbeispiele

Beispiel 1:

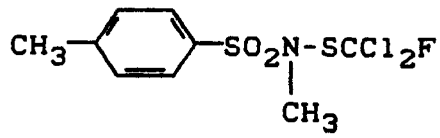

18,5 g (0,1 Mol) 4-Toluolsulfonsäure-N-methylamid werden in 100 ml Toluol unter Zusatz von 16,9 g (0,1 Mol) Dichlorfluormethansulfenylchlorid gelöst und bei Raumtemperatur mit der Lösung von 11,2 g (0,11 Mol) Triethylamin in 20 ml Toluol versetzt. Hierbei steigt die Temperatur bis etwa 50° C an. Man setzt Wasser zu, trennt die Schichten und engt die Toluollösung nach dem Trocknen im Vakuum ein. Der Rückstand (27 g; $n_D^{20}$ ° : 1,5528) wird im Hochvakuum destilliert. Man erhält 21 g (66 % der Theorie) an gewünschter Substanz mit folgenden physikalischen Daten: $Kp_{0,15}$ : 150 bis 155° C, n $_D^{20}$° 1,5519, Fp. 42 bis 43° C.

In analoger Weise werden Verbindungen der Formel (I)

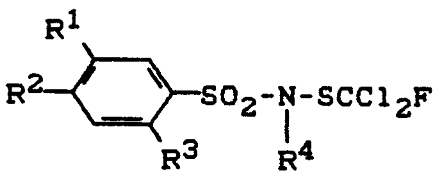

(I)

erhalten:

| Bsp. | $R^1$ | $R^2$ | $R^3$ | $R^4$ | physikalische Daten: Fp.(° C); $n_D^{20}$ :; Kp.(° C/mm Hg) |
|---|---|---|---|---|---|
| 2 | H | H | H | $C_2H_5$ | 133-40/0,2 |
| 3 | H | H | H | $C_4H_9$-n | 140-45/0,1 |
| 4 | H | $CH_3$ | H | $C_2H_5$ | 153-58/0,2 |
| 5 | H | $CH_3$ | H | $C_4H_9$-n | 168-69/0,15 |
| 6 | H | Cl | H | $C_2H_5$ | 170-75/0,2 |
| 7 | $NO_2$ | $CH_3$ | H | $CH_3$ | 69-70 |
| 8 | $NO_2$ | $CH_3$ | H | $C_4H_9$-n | 56-58 |
| 9 | $NO_2$ | H | $CH_3$ | $C_4H_9$-n | 86-88 |
| 10 | H | H | $NO_2$ | $C_4H_9$-n | 76-78 |
| 11 | $NO_2$ | H | H | $C_4H_9$-n | 62 |
| 12 | $NO_2$ | Cl | H | $C_4H_9$-n | 74-75 |
| 13 | H | $NO_2$ | H | $CH_3$ | 107-108 |
| 14 | H | $NO_2$ | H | $C_4H_9$-n | 1,5574 |
| 15 | $NO_2$ | H | Cl | $C_4H_9$-n | 57-58 |
| 16 | $CH_3$ | $CH_3$ | H | $CH_3$ | Cl Ber. 21,4<br>Gef. 21,4 |
| 17 | $CH_3$ | $CH_3$ | H | $C_3H_7$-i | 78-80 |
| 18 | $CH_3$ | H | $CH_3$ | $CH_3$ | 79 |
| 19 | H | $CH_3$ | H | $C_6H_{11}$ | 89-90 |
| 20 | H | $CH_3$ | H | $C_3H_5$ | 1,5536 |
| 21 | H | $CH_3$ | H | $-CH_2CH_2CH_2-OCH_3$ | 1,5396 |
| 22 | H | $CH_3$ | H | 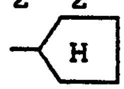 | 1.5683 |

Beispiel 23:

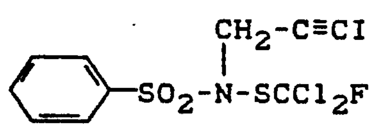

0,1 Mol N-Iodpropargylbenzolsulfonamid werden in Tetrahydrofuran gelöst, 18,6 g (0,11 Mol) Dichlorfluormethansulfensäurechlorid werden zugegeben und die Lösung wird auf 0° C abgekühlt. Bei dieser Temperatur werden 11 g (0,11 Mol) Triethylamin langsam zugetropft. Es wird langsam auf Raumtemperatur kommen gelassen, dann 1 Stunde auf 60° C erwärmt. Das Lösungsmittel wird im Vakuum abgezogen, der Rückstand in Methylenchlorid aufgenommen und die organische Phase mit Wasser gewaschen. Nach Trocknen über Natriumsulfat wird das Lösungsmittel abgezogen und der verbleibende Rückstand in Cyclohexan aufgenommen. Es wird von nicht gelöstem Ausgangsprodukt abgetrennt und einrotiert. Das zunächst verbleibende Öl kristallisiert im Kühlschrank.

Schmelzpunkt: 82-84° C.

Analog werden erhalten:

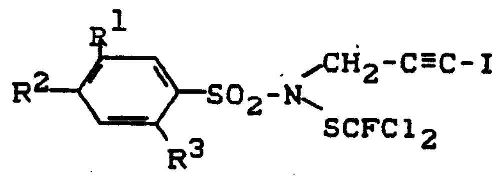

| Bsp. | $R^1$ | $R^2$ | $R^3$ | physikalische Daten Fp.(°C) |
|---|---|---|---|---|
| 24 | H | H | H | 82- 84 |
| 25 | H | $CH_3$ | H | 106-108 |
| 26 | H | Cl | H | 99-101 |
| 27 | Cl | Cl | H | 81- 83 |

Herstellung der Vorprodukte

V 1

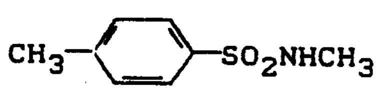

38 g (0,2 Mol) 4-Toluolsulfochlorid in 125 ml Toluol gelöst werden mit 13 g (0,4 Mol) gasförmigen Methylamin unter Kühlung bei 20 -30° C beschickt. Das Reaktionsprodukt sowie Methylammoniumchlorid fallen sofort aus. Man saugt ab und wäscht mit Wasser und trocknet. Man erhält 32 g (86,5 % der Theorie) an gewünschtem Produkt mit einem Schmelzpunkt von 77-79° C.

Analog werden folgende Sulfonamide der Formel (II) hergestellt:

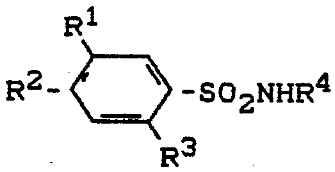

(II)

| Bsp. | $R^1$ | $R^2$ | $R^3$ | $R^4$ | physikalische Daten: Fp.(°C); $n_D^{20}$ :; Kp.(°C/mm Hg) |
|---|---|---|---|---|---|
| V 2 | H | H | H | $C_2H_5$ | 54-55 |
| V 3 | H | H | H | $C_4H_9$-n | 1,5238 |
| V 4 | H | $CH_3$ | H | $C_2H_5$ | 63-64 |
| V 5 | H | $CH_3$ | H | $C_4H_9$-n | 41-43 |
| V 6 | H | Cl | H | $C_2H_5$ | 70-71 |
| V 7 | $NO_2$ | $CH_3$ | H | $CH_3$ | 69-70 |
| V 8 | $NO_2$ | $CH_3$ | H | $C_4H_9$-n | 56-58 |
| V 9 | $NO_2$ | H | $CH_3$ | $C_4H_9$-n | 86-88 |
| V10 | H | H | $NO_2$ | $C_4H_9$-n | 76-78 |
| V11 | $NO_2$ | H | H | $C_4H_9$-n | 62-63 |
| V12 | $NO_2$ | Cl | H | $C_4H_9$-n | 74-75 |
| V13 | H | $NO_2$ | H | $CH_3$ | 102-104 |
| V14 | H | $NO_2$ | H | $C_4H_9$-n | 78-80 |
| V15 | $NO_2$ | H | Cl | $C_4H_9$-n | 135-136 |
| V16 | $CH_3$ | $CH_3$ | H | $CH_3$ | ölig |
| V17 | $CH_3$ | $CH_3$ | H | $C_3H_7$i | ölig |
| V18 | $CH_3$ | H | $CH_3$ | $CH_3$ | 84-85 |
| V19 | H | $CH_3$ | H | $C_6H_{11}$ | 85-86 |
| V20 | H | $CH_3$ | H | $C_3H_5$ | 63-65 |
| V21 | H | $CH_3$ | H | $-CH_2-CH_2-CH_2-OCH_3$ | 1,5242 |
| V22 | H | $CH_3$ | H | 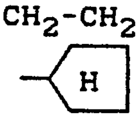 | 82-84 |

Beispiel V23:

a)

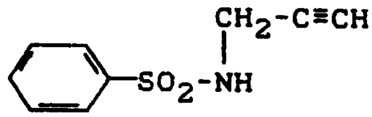

Zu einer Lösung von 6 g (0,11 Mol) Propargylamin und 11 g (0,11 Mol) Triethylamin in 50 ml Tetrahydrofuran werden bei Raumtemperatur 0,1 Mol Phenylsulfonylchlorid, gelöst in wenig Tetrahydrofuran zugetropft. Anschließend wird über Nacht unter Rückfluß erhitzt, das Lösungsmittel abdestilliert und der Rückstand in Wasser aufgenommen. Das Festprodukt wird abgesaugt, mit Wasser gewaschen und an der Luft getrocknet. Eventuelle Reste nicht umgesetzten Sulfochlorids können durch Waschen des Filterkuchens mit Cyclohexan oder Petrolether entfernt werden.

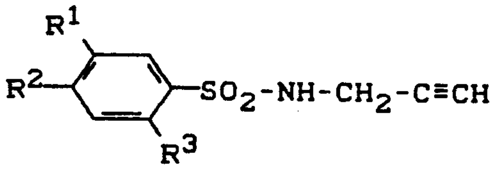

| Bsp. | $R^1$ | $R^2$ | $R^3$ | physikalische Daten: Fp.(°C) |
|---|---|---|---|---|
| VV24 | H | H | H | 73-74 |
| VV25 | H | $CH_3$ | H | 68-70 |
| VV26 | H | Cl | H | 45-47 |
| VV27 | Cl | Cl | H | 98-100 |

b)

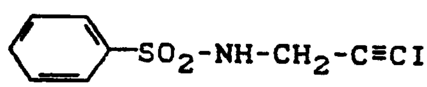

In 250 ml Methanol werden 0,1 Mol N-Propargylphenylsulfonamid gelöst. Nach Abkühlen der Lösung auf -10° C werden 75 g 25 %iger Natronlauge so zugetropft, daß die Temperatur unter 0° C bleibt. Anschließend werden bei 0 bis 5° C 34 g Iod portionsweise innerhalb 5 Minuten zugesetzt. Es wird 2 Stunden bei 0 bis 5° C weitergerührt, dann bei Temeraturen <25° C das Lösungsmittel vollständig im Vakuum abgezogen. Der Rückstand wird in Wasser aufgenommen, mit verdünnter Salzsäure wird auf pH 3 eingestellt und mit 10 %iger Natriumhydrogensulfitlösung entfärbt. Nach Absaugen der Suspension werden die Kristalle mit Wasser gewaschen und im Vakuum getrocknet.

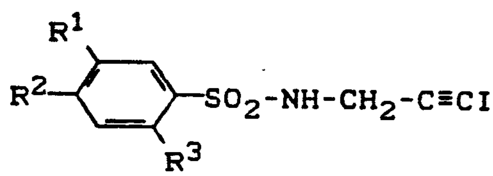

| Bsp. | $R^1$ | $R^2$ | $R^3$ | physikalische Daten: Fp.(°C) |
|---|---|---|---|---|
| V 24 | H | H | H | 81-83 |
| V 25 | H | $CH_3$ | H | 124-125 |
| V 26 | H | Cl | H | 119-120 |
| V 27 | Cl | Cl | H | 104-105 |

Anwendungsbeispiele

In den nachfolgenden Anwendungsbeispielen werden die nachstehend aufgeführten Verbindungen als Vergleichssubstanzen verwendet:

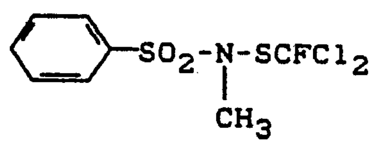

(A)

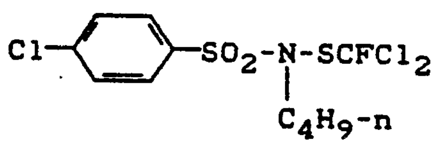

(B)

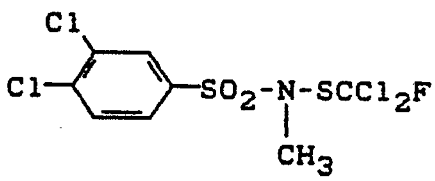

(C)

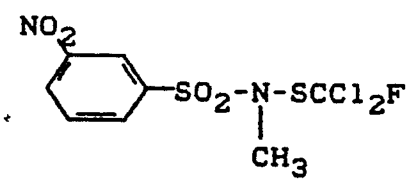

(D)

Alle Verbindungen sind bekannt aus DE-PS 1.193.498.

Beispiel A

Phytophthora-Test (Tomate) /protektiv

Lösungsmittel: 4,7 Gewichtsteile Aceton

Emulgator: 0,3 Gewichtsteile Alkyl-aryl-polyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Sporensuspension von Phytophthora infestans inokuliert.

Die Pflanzen werden in einer Inkubationskabine mit 100 % relativer Luftfeuchtigkeit und ca. 20°C aufgestellt.

3 Tage nach der Inokulation erfolgt die Auswertung.

Eine deutliche Überlegenheit in der Wirksamkeit gegenüber dem Stand der Technik zeigen in diesem Test z.B. die Verbindungen der Herstellungsbeispiele: 11, 18, 23, 27 und 13.

Beispiel B

Drechslera graminea-Test (Gerste) / Saatgutbehandlung (syn. Helminthosporium gramineum)

Die Anwendung der Wirkstoffe erfolgt als Trockenbeizmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut setzt man in gesiebter, feuchter Standarderde eingebettet, in verschlossenen Petrischalen im Kühlschrank 10 Tage lang einer Temperatur von 4° C aus. Dabei wird die Keimung der Gerste und gegebenenfalls auch der Pilzsporen eingeleitet. Anschließend sät man die vorgekeimte Gerste mit 2 x 50 Korn 3 cm tief in eine Standarderde und kultiviert sie im Gewächshaus bei einer Temperatur von ca. 18° C in Saatkästen, die täglich 15 Stunden dem Licht ausgesetzt werden.

Ca. 3 Wochen nach der Aussaat erfolgt die Auswertung der Pflanzen auf Symptome der Streifenkrankheit.

Eine deutliche Überlegenheit in der Wirksamkeit gegenüber dem Stand der Technik zeigen in diesem Test z.B. die Verbindungen der Herstellungsbeispiele: 2, 1, 4, 5, 6 und 16.

Beispiel C

Pyrenophora teres-Test (Gerste) / protektiv

Lösungsmittel: 100 Gewichtsteile Dimethylformamid

Emulgator: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Abtrocknen des Spritzbelages werden die Pflanzen mit einer Konidiensuspension von Pyrenophora teres besprüht. Die Pflanzen verbleiben 48 Stunden bei 20° C und 100 % relativer Luftfeuchtigkeit in einer Inkubationskabine.

Die Pflanzen werden in einem Gewächshaus bei einer Temperatur von ca. 20° C und einer relativen Luftfeuchtigkeit von ca. 80 % aufgestellt.

7 Tage nach der Inokulation erfolgt die Auswertung.

Eine deutliche Überlegenheit in der Wirksamkeit gegenüber dem Stand der Technik zeigen in diesem Test z.B. die Verbindungen der Herstellungsbeispiele: 7, 10, 11, 13, 14, 15 und 27.

**Ansprüche**

1. N-Sulfenylierte Benzolsulfonsäureamide der allgemeinen Formel (I)

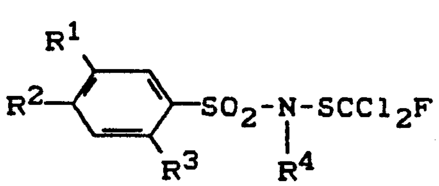

(I)

in welcher

$R^1$, $R^2$ und $R^3$ unabhängig voneinander für Wasserstoff, Halogen, Nitro, Alkyl und Halogenalkyl stehen und

$R^4$ für Alkyl, Alkenyl, Halogenalkinyl, gegebenenfalls durch Alkyl substituiertes Cycloalkyl, Alkoxyalkyl oder Alkylthioalkyl steht, ausgenommen die Verbindungen, in denen

$R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$ für

Wasserstoff stehen, oder $R^1$ und $R^3$ für Chlor und $R^2$ für Wasserstoff stehen und $R^4$ für n-Butyl, $R^1$und $R^3$ für Wasserstoff und $R^2$ für Chlor stehen.

2. N-Sulfenylierte Benzolsulfonsäureamide gemäß Anspruch 1, wobei in der Formel (I)

$R^1$, $R^2$ und $R^3$ unabhängig voneinander für Wasserstoff, Fluor, Chlor, Brom, Alkyl mit 1 bis 3 Kohlenstoffatomen, Halogenalkyl mit 1 bis 3 Kohlenstoffatomen und 1 bis 5 Halogenatomen, stehen und

$R^4$ für Alkyl mit 1 bis 6 Kohlenstoffatomen, Alkenyl mit 3 bis 5 Kohlenstoffatomen, Halogenalkinyl mit 1 bis 3 Chlor-oder Iodatomen und 3 bis 5 Kohlenstoffatomen, gegebenenfalls ein-bis vierfach durch Alkyl mit 1 bis 3 Kohlenstoffatomen substituiertes monocyclisches Cycloalkyl mit 3 bis 7 Kohlenstoffatomen, Alkoxyalkyl oder Alkylthioalkyl mit 1 bis 4 Kohlenstoffatomen je Alkoxy-und Alkylthio-und 2 -4 Kohlenstoffatomen im Alkylteil steht, ausgenommen die Verbindungen, in denen

$R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$für Wasserstoff stehen, oder $R^1$ und $R^3$ für Chlor und $R^2$ für Wasserstoff stehen und $R^4$ für n-Butyl, $R^1$ und $R^3$ für Wasserstoff und $R^2$ für Chlor stehen.

3. N-Sulfenylierten Benzolsulfonsäureamide gemäß Anspruch 1, wobei in der Formel (I)

$R^1$, $R^2$ und $R^3$ unabhängig voneinander für Wasserstoff, Brom, Chlor, Alkyl mit 1 oder 2 Kohlenstoffatomen, Halogenalkyl mit 1 oder 2 Kohlenstoffatomen und 1 bis 5 Fluoratomen stehen und

$R^4$ für Alkyl mit 1 bis 5 Kohlenstoffatomen, für Alkenyl mit 3 bis 5 Kohlenstoffatomen, Halogenalkinyl mit 3 oder 4 Kohlenstoffatomen und 1 bis 3 Iodatomen, gegebenenfalls ein-bis vierfach durch Methyl oder Ethyl substituiertes monocyclisches Cycloalkyl mit 5 oder 6 Kohlenstoffatomen, Alkoxyalkyl oder Alkylthioalkyl mit 1 bis 3 Kohlenstoffatomen je Alkoxy-und Alkylthio-und 2-3 Kohlenstoffatomen im Alkylteil steht, ausgenommen die Verbindungen, in denen

$R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$ für Wasserstoff stehen, oder $R^1$ und $R^3$ für Chlor und $R^2$ für Wasserstoff stehen und $R^4$ für n-Butyl, $R^1$ und $R^3$ für Wasserstoff und $R^2$ für Chlor stehen.

4. N-Sulfenylierte Benzolsulfonsäureamide gemäß Anspruch 1, wobei in der Formel (I)

$R^1$, $R^2$ und $R^3$ unabhängig voneinander für Wasserstoff, Chlor, Nitro oder Methyl steht,

$R^4$ für Methyl, Ethyl, iso-Propyl, n-Butyl, Iodpropargyl, Cyclopentyl, Cyclohexyl, Allyl oder 3-Methoxy-n-propyl steht, ausgenommen die Verbindungen, in denen

$R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$ für Wasserstoff stehen, oder $R^1$ und $R^3$ für Chlor und $R^2$ für Wasserstoff stehen und $R^4$ für n-Butyl, $R^1$ und $R^3$ für Wasserstoff und $R^2$ für Chlor stehen.

5. Verfahren zur Herstellung von N-sulfenylierten Benzolsulfonsäureamiden der Formel (I)

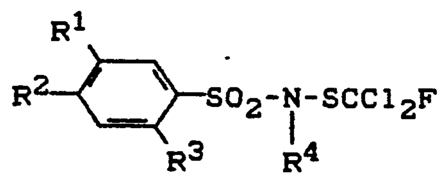

(I)

in welcher

$R^1$, $R^2$ und $R^3$ unabhängig voneinander für Wasserstoff, Halogen, Nitro, Alkyl und Halogenalkyl stehen und

$R^4$ für Alkyl, Alkenyl, Halogenalkinyl, gegebenenfalls durch Alkyl substituiertes Cycloalkyl, Alkoxyalkyl oder Alkylthioalkyl steht, ausgenommen die Verbindungen, in denen

$R^4$ für Methyl, $R^1$, $R^2$ und $R^3$ für Wasserstoff oder $R^1$ für Chlor oder Nitro, $R^2$ für Chlor und $R^3$ für Wasserstoff stehen, oder $R^1$ für Nitro und $R^2$ und $R^3$für Wasserstoff stehen, oder $R^1$ und $R^3$ für Chlor und $R^2$ für Wasserstoff stehen und $R^4$ für n-Butyl, $R^1$ und $R^3$ für Wasserstoff und $R^2$ für Chlor stehen,

dadurch gekennzeichnet, daß man Benzolsulfonamide der allgemeinen Formel (II)

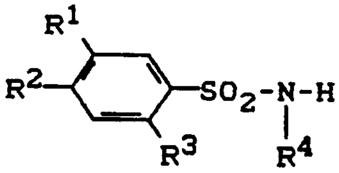

(II)

in welcher die Reste R' bis R⁴ die oben angegebene Bedeutung haben, mit Dichlorfluormethansulfenylchlorid der Formel (III)

$Cl\text{-}SCCl_2F$ (III)

in Gegenwart eines säurebindenden Mittels und gegebenenfalls in Gegenwart eines Verdünnungsmittels umsetzt.

6. Fungizide Mittel im Pflanzenschutz, gekennzeichnet durch einen Gehalt an mindestens einem N-sulfenylierten Benzolsulfonsäureamid der Formel (I) gemäß den Ansprüchen 1 bis 5.

7. Verwendung von N-sulfenylierten Benzolsulfonsäureamiden der Formel (I) gemäß den Ansprüchen 1 bis 5 zur Bekämpfung von Pilzen im Pflanzenschutz.

8. Verfahren zur Bekämpfung von Pilzen im Pflanzenschutz, dadurch gekennzeichnet, daß man N-sulfenylierte Benzolsulfonsäureamide der Formel (I) gemäß den Ansprüchen 1 bis 5 auf Pilze und/oder ihren Lebensraum einwirken läßt.

9. Verfahren zur Herstellung von fungiziden Mitteln im Pflanzenschutz, dadurch gekennzeichnet, daß man N-sulfenylierte Benzolsulfonsäureamide der Formel (I) gemäß den Ansprüchen 1 bis 5 mit Streckmitteln und/oder oberflächenaktiven Mitteln vermischt.